# EUROPÄISCHE PATENTSCHRIFT

(11) **EP 0 446 237 B1**
(45) Veröffentlichungstag und Bekanntmachung des Hinweises auf die Patenterteilung: **28.09.1994**
(21) Anmeldenummer: 89912978.7
(22) Anmeldetag: 28.11.1989
(51) Int. Cl.: F27D 13/00, C21C 5/52, F27B 14/02

(54) **OFENANLAGE ZUM EINSCHMELZEN VON SCHROTT**
FURNACE FOR MELTING DOWN SCRAP IRON
FOUR POUR FAIRE FONDRE DES FERRAILLES

(30) Priorität: 01.12.1988 DE 3840486
(43) Veröffentlichungstag der Anmeldung: 18.09.1991
(73) Patentinhaber: MANNESMANN Aktiengesellschaft, 40027 Düsseldorf (DE)
(72) Erfinder: MEIERLING, Peter, D-4000 Düsseldorf 31 (DE)
(74) Vertreter: Meissner, Peter E., Dipl.-Ing.
(86) Internationale Anmeldenummer: DE8900746
(87) Internationale Veröffentlichungsnummer: WO9006481

(56) Entgegenhaltungen:
- EP-A- 0 200 405
- DE-A- 1 433 424
- DE-A- 2 944 269
- GB-A- 101 310

## Beschreibung

Die Erfindung bezieht sich auf eine Ofenanlage zum Einschmelzen von Schrott o. dgl. Eisenträgern mit einem kippbaren Gefäß mit den Merkmalen nach dem Oberbegriff des Anspruchs 1.

Es sind zahlreiche Vorschläge bekanntgeworden, für das Einschmelzen von Schrott im Elektroofen die elektrische Energie durch kohlenstoffhaltige Brennstoffe, die mit Sauerstoff verbrannt werden, zu substituieren (DE-0S 14 33 424, EP-0S 200 405, EP-0S 257 450). Als Gefäß verwenden die bekannten Ofenanlagen den herkömmlichen Elektrolichtbogenofen mit den zugehörigen in der Regel aufwendigen Einrichtungen. Eine über die teilweise Substituierung der elektrischen Energie hinausgehende Energie-Substituierung ist in den bekannten Anlagen nicht vorgesehen.

Ein im Hinblick auf Einsatzmaterial und Energiequellen universelles metallurgisches Schmelzaggregat ist Gegenstand des DE-GM 79 36 140. Bei diesem Schmelzaggregat steht die Behandlung des Einsatzmaterials, das auch ausschließlich flüssiges Roheisen sein kann, ohne die Verwendung elektrischer Energie im Vordergrund. Die ausschließliche Behandlung des Einsatzes mit elektrischer Energie ist dagegen nicht vorgesehen. Das bekannte Schmelzaggregat soll sich ferner durch geringe Anlagekosten auszeichnen, Einzelheiten der zugehörigen Schmelzofenanlage sind in der Schrift jedoch nicht offenbart.

Der Erfindung liegt die Aufgabe zugrunde, eine Ofenanlage der eingangs genannten Art so zu verbessern, daß im Hinblick auf die verschiedenen Energiearten größtmögliche Flexibilität erzielt wird und die Anlagekosten trotzdem gering gehalten werden können. Die Lösung der Aufgabe besteht in den Merkmalen des kennzeichnenden Teils des ersten Patentanspruchs.

Der Aufbau der Ofenanlage nach der Erfindung ermöglicht nicht nur größtmögliche Flexibilität im Hinblick auf die Beheizbarkeit des Gefäßes abhängig von den zur Verfügung stehenden Energieträgern, sondern gewährleistet gleichzeitig eine wirtschaftliche Betriebsweise und geringstmögliche Anlagekosten.

Vorteilhafte Ausgestaltungen der Erfindung sind in den Unteransprüchen wiedergegeben.

Die neue Ofenanlage ist in erster Linie für den Einsatz bei neu erstellten Hüttenwerken, insbesondere für sogenannte Ministahlwerke, vorgesehen. Sie eignet sich aber auch für den Ersatz bestehender entsprechender Anlagen, insbesondere Elektrolichtbogenofen-Anlagen, im Rahmen von Umbauten bzw. Modernisierungen.

Die bevorzugten Ausführungsformen der neuen Ofenanlage ermöglichen eine Reihe von anlagen- und verfahrenstechnischen Vorteilen. Durch das Verhältnis Innendurchmesser/Höhe des Ofens zwischen 0,6 und 1,1, vorzugsweise 0,8 und 1 wird bei Einsatz von Schrott und Beschickung mittels eines Schrottkübels eine wirtschaftliche Ein-Korb-Fahrweise ermöglicht. Außerdem ist durch dieses Merkmal ein großes Volumen oberhalb der Schmelze vorhanden, das zum Nachverbrennen der entweichenden Gase zum Zweck der Energiezufuhr an die Schmelze nutzbar gemacht werden kann.

Die Kippachse des Gefäßes in den Bereich des Durchtritts der Elektroden durch den Deckel zu legen ermöglicht es, das Gefäß bei eingefahrenen Elektroden zu kippen, ohne daß eine große Durchtrittsöffnung für die Elektroden vorgesehen werden muß und ohne daß diese beschädigt werden. Für die Aufhängung des Gefäßes gibt es dabei eine Reihe von Möglichkeiten. Besonders vorteilhaft ist es, wenn für die Pendel-Aufhängung beiderseits des Gefäßes eine rollengestützte Wiege angeordnet ist. Diese Ausführungsform ermöglicht gleichzeitig, die Rollen in einem Rahmen zusammenzufassen, wie auch diese von der Wiege abzurücken und zum Verfahren des Gefäßes auf den zugeordneten Schienen abzustützen. Damit entfällt der normalerweise zum Verfahren des Gefäßes eingesetzte, auf Schienen laufende Wagen.

Bevorzugt ist vorgesehen, über dem Gefäß mindestens eine Elektroden-Hubeinrichtung lotrecht verfahrbar anzuordnen, an deren unterem Ende die Elektrode angeordnet ist, und daß dabei die Hubeinrichtung eine parallel zur Elektrode verlaufende und geführte Schiene und am unteren Ende eine mit einer Elektroden-Haltevorrichtung versehene Konsole aufweist und mit einem, vorzugsweise mit einer hubvergrößernden Seilrollenanordnung (sog. Hubdoppler oder Hubvervielfacher) versehenen Hydraulikzylinder betätigbar ist. Dadurch entfallen aufwendige Elektrodentragarme und die zugehörigen umfangreichen und entsprechend teuren Halterungseinrichtungen. Die Konsole am unteren Ende der jeweiligen Hubeinrichtung bewirkt, daß die Hubeinrichtung nicht der Hitzeinwirkung über den Deckelöffnungen ausgesetzt ist.

Die Kippbarkeit, die durch den vorgesehenen seitlichen Bodenabstich gering gehalten werden kann (maximal etwa 15°), kann jedoch je nach verfahrens- und anlagentechnischer Verwendung des Gefäßes variiert werden. Zu diesem Zweck werden die Segmente der wassergekühlten Seitenwände des Gefäßes zumindest im Bereich der Abstichöffnung gegen solche mit einer anderen Höhe dadurch austauschbar gehalten, daß die Herdwand den kürzeren Segmenten entsprechend nach oben hin verlängert und - an den betreffenden Stellen - feuerfest auskleidbar ist. Der installierte Kippwinkel soll jedoch möglichst 10 ° nicht überschreiten. Die Ausrichtung der Abstichöffnung - vorzugsweise senkrecht - nach unten in der gekippten Abstichstellung des Gefäßes verringert ihren Verschleiß auf ein Minimum.

Durch die Verwendung eines seitlich verschwenkbaren Deckels als Verschluß der Abstichöffnung, die im Betrieb mit einem keramischen Material verfüllt wird, wird unter dem Herd des Gefäßes Raumhöhe eingespart. Die Abschlacköffnung des Gefäßes soll so klein wie verfahrenstechnisch möglich gehalten werden und bevorzugt einen runden Querchnitt aufweisen, wodurch die Anlagekosten und Wärmeabstrahlung verringerbar sind.

Alternativ zur Beheizbarkeit mit Elektroden können Plasmabrenner vorgesehen sein, wobei die Elektroden-Hubvorrichtung mit Versorgungsanschlüssen für den Plasmabrenner versehen sein können, um auf diese Weise die Austauschbarkeit zu vereinfachen. Bei ElektrodenBeheizung ist in erster Linie die übliche Dreiecksanordnung mit Wechselstromversorgung vorgesehen. Im Ausnahmefalle ist es selbstverständlich auch möglich, Gleichstrom einzusetzen, wobei der Boden des Gefäßes entsprechend auszubilden ist. Das Gefäß und alle übrigen wesentlichen Teile der neuen Ofenanlage sind vorzugsweise in einem Gehäuse angeordnet, dessen Wände sich möglichst eng an das Gefäß und die Teile anschließt. Auf diese Weise wird die sogenannte Hallenentstaubung vereinfacht. Das Gehäuse ist mit einem seitlichen Ausgangstor versehen, durch welches das Gefäß zum Chargieren, ggf. aus einer Schrottvorwärmeinrichtung, verfahren wird. Vor dem Verfahren wird der Deckel, der in üblicher Weise mit einer Gasabsaubung versehen ist, mittels einer Hubeinrichtung angehoben.

Die in das Gefäß einführbaren Düsen können je nach Betriebsweise als Sauerstoffdüsen, als mit festem Kohlenstoff, Öl oder Gas beheizte Brenner oder auch für das Einblasen anderer, z.B. Zuschlags- oder Legierungsstoffe eingesetzt werden. Die Ofenanlage kann so dimensioniert und eingerichtet werden, daß ausschließlich mit einer Energieart eine Schmelze bis zum fertigen Stahl hergestellt werden kann und trotzdem kurze Abstich-Intervalle, z.B. zwischen 30 und 40 Minuten, erzielt werden können. Ein Frischen durch Sauerstoff- Aufblasen - bevorzugt mittels der in der Seitenwand oberhalb der Schmelze angeordneten Düsen durchzuführen - kann in leicht gekippter Stellung des Gefäßes erfolgen. Die im Herdbereich eingesetzten Düsen können als Unterbaddüsen im Boden des Gefäßes angeordnet werden. Bevorzugt wird jedoch ihr Einsatz in der Seitenwand des Gefäßes. Die Anzahl der Düsen hängt in erster Linie von der Größe des Gefäßes, aber auch von der Art und Größe der Düsen ab. Die Anschlüsse für die Versorgung der Düsen weisen in bekannter Weise flexible Leitungen und/oder schnell betätigbare Leitungskupplungen auf, die ein Verfahren des Gefäßes bis in die Chargier-Position ermöglichen.

Ausführungsbeispiele der Erfindung sind in der Zeichnung schematisch dargestellt und nachfolgend näher erläutert. Es zeigen
- Fig. 1: eine Ausführungsform der Ofenanlage nach der Erfindung in senkrechtem Schnitt,
- Fig. 2: eine andere Ausführungsform einer Ofenanlage ebenfalls in senkrechtem Schnitt,
- Fig. 3: einen Schritt nach der Linie III-III in Fig. 2,
- Fig. 4: das Gefäß nach Fig. 3 in Kippstelung und
- Fig. 5 + 6: ein mit einer Wiege ausgerüstetes Gefäß, deren Rollen gleichzeitig als Fahrgestell dienen, in Betriebs- und in Verfahrstellung.

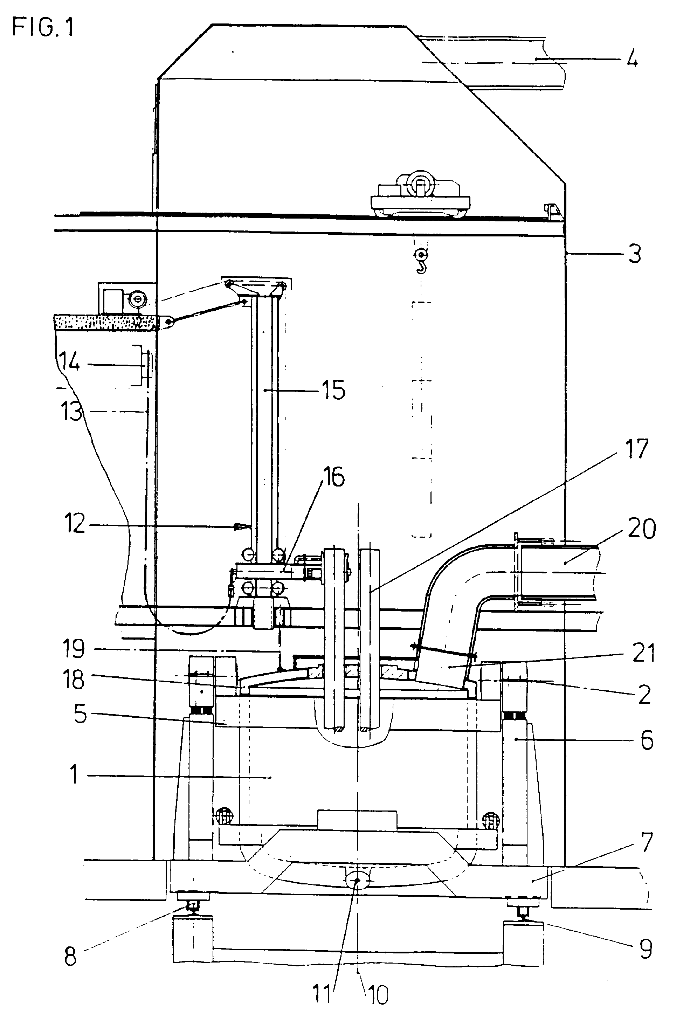

Beim Ausführungsbeispiel nach Fig. 1 ist ein um eine horizontale Achse 2 kippbares Gefäß 1 in einem sich im wesentlichen über dem Gefäß erstreckenden Gehäuse 3 angeordnet. Das Gehäuse 3, das an seinem oberen Ende mit einem Rauchgasabzug 4 versehen ist, umschließt mit seinen Seitenwänden das Gefäß 1 mit geringem seitlichen Abstand. über seine an einem Tragring 5 angeordneten und in der Achse 2 liegenden Tragzapfen ist das Gefäß 1 über Lagerböcke 6 auf einem Wagen 7 abgestützt, der mit Fahrwerken 8 versehen ist, welche horizontalen Schienen 9 zugeordnet sind. Die Schienen 9 verlaufen senkrecht zu der horizontalen Achse 2. In der senkrechten Mittelebene 10 des Gefäßes 1, die parallel zu den Schienen 9 verläuft, ist im Bereich der Kante zwischen Herd und Seitenwand des Gefäßes 1 eine Abstichöffnung 11 angeordnet.

Über dem Gefäß sind im Gehäuse 3 drei Elektrodenhubeinrichtungen 12 angeordnet, die jeweils über eine Leitung 13 mit einer Stromversorgung 14 in Verbindung stehen. Die Hubeinrichtungen 12 weisen jeweils eine senkrecht verlaufende Schiene 15 auf, an der eine Konsole 16 in senkrechter Richtung verfahrbar ist, die an ihrem freien Ende jeweils eine Elektrode 17 mit Klemmbackenbefestigung hält. Der wassergekühlte Deckel 18 des Gefäßes 1 ist an einem Hubwerk 19 aufgehängt, das ihn um einen geringen Betrag anzuheben vermag, um ein Verfahren des Gefäßes zu ermöglichen. Die durch eine Rohrleitung 20 gebildete Gasabsaugung des Gefäßes, die an den Deckel 18 angeschlossen ist, ermöglicht dessen Anheben durch einen Kompensator 21, der auch das Kippen des Gefäßes zuläßt.

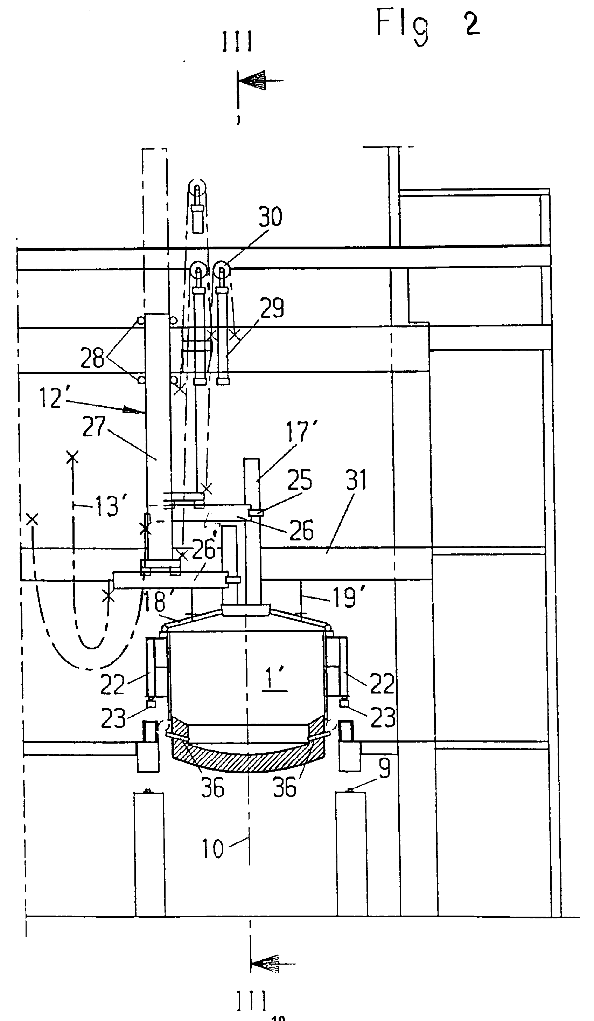

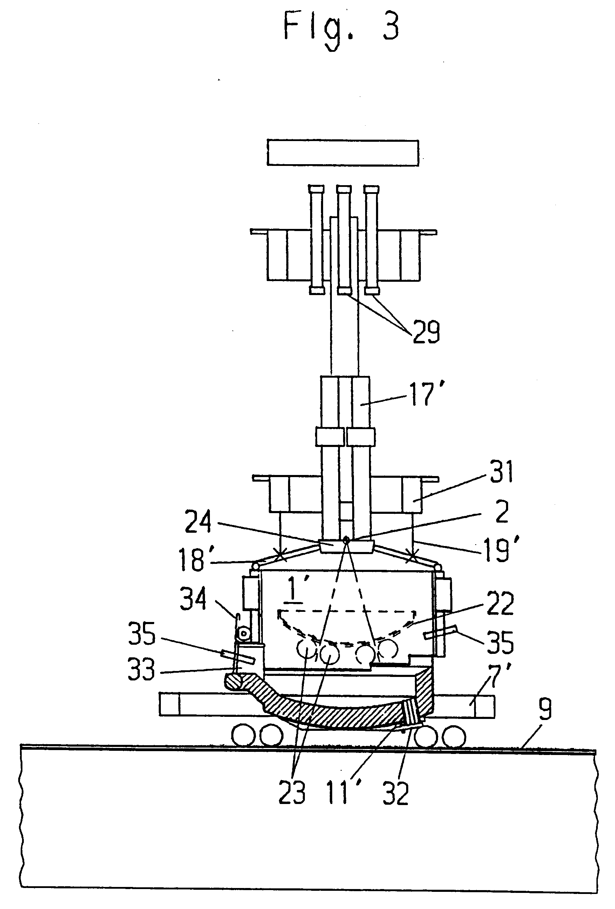

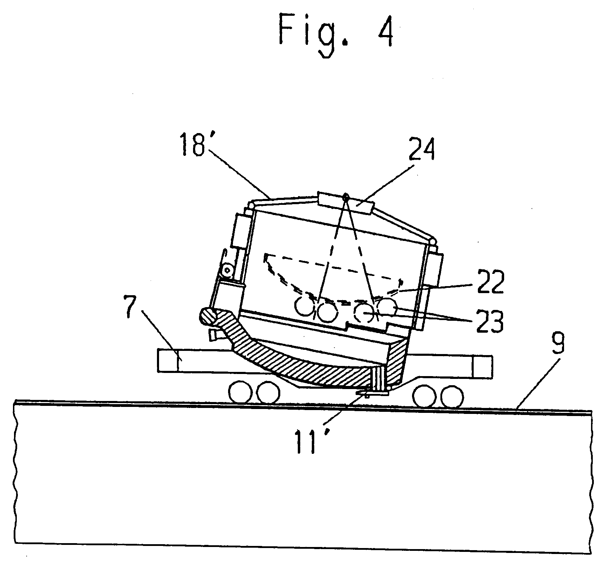

Das in den Fig. 2 bis 4 gezeigte Gefäß 1′ unterscheidet sich von dem nach Fig. 1 im wesentlichen dadurch, daß anstelle der Kippzapfen Wiegen 22 vorgesehen sind, die sich auf Rollen 23 abstützen. Die an jeder Seite des Gefäßes zu zwei Schwingen zusammengefaßten Rollen 23 sind auf einem Wagen 7′ gelagert, der sich wieder auf den Schienen 9 zum Verfahren des Gefäßes abstützt. Die Wiegen 22 sind so gestaltet und angeordnet, daß die horizontale Kippachse 2 des Gefäßes 1′ durch ein zentrales Herzstück 24 des Gefäß-Deckels 18′ verläuft. Das Herzstück 24 weist drei nicht gezeigte Öffnungen auf, durch welche die Elektroden 17′ absenkbar sind. Die Öffnungen sind so bemessen, daß auch beim maximalen Kippwinkel des Gefäßes, wie es in Fig. 4 gezeigt ist, die Elektroden nicht berührt werden.

In Fig. 2 ist zu erkennen, daß die Elektroden 17′ über Klemmbacken 25 an Konsolen 26 befestigt sind, die am unteren Ende elektrisch isoliert an Schienen 27 befestigt sind, welche zusammen mit den fest angeordneten Rollenführungen 28 Elektroden-Hubeinrichtungen 12′ bilden. Ebenfalls fest angeordnete Hydraulikzylinder 29, die am freien Ende ihrer Kolbenstange jeweils eine lose Rolle 30 eines Seilzuges tragen, sind dadurch als sogenannte Hubdoppler ausgebildet und bewirken durch entsprechende Seilführung die Hub- bzw. Absenkbewegungen der jeweiligen Hubeinrichtung 12′. Die stromführenden Konsolen 26′ sind über Leitungen 13′ mit der nicht dargestellten Stromquelle (Transformator) verbunden. Der Deckel 18′ ist über an der Tragkonstruktion 31 befestigten Hubeinrichtungen 19′ höhenverstellbar aufgehängt.

Im Bereich der Kante zwischen dem nach unten gewölbten und feuerfest ausgekleideten Herd und der Seitenwand des Gefäßes 1′ ist eine mit einem seitlich verschwenkbaren Verschluß 32 versehene Abstichöffnung 11′ so angeordnet, daß ihre Mittelachse in gekippter Abstichstellung des Gefäßes, in der der Kippwinkel etwa 8° beträgt, senkrecht nach unten weist, wie es in Fig. 4 gezeigt ist. In der gleichen senkrechten Gefäßmittelebene 10 ist am gegenüberliegenden Ende eine Abschlacköffnung 33 angeordnet, die mit einer Klappe 34 verschließbar ist und in üblicher Weise oberhalb des Herdes in der Normallage des Gefäßes liegt. Die Abschlacköffnung 33 kann gleichzeitig zur Einführung einer der Düsen 35 dienen, die über den Umfang des Gefäßes gleichmäßig verteilt im Bereich der wassergekühlten Seitenwände angeordnet sind. Je nach Betriebsweise der Ofenanlage können diese Düsen zum Einschmelzen, Nachverbrennen und Frischen dienen und mit den entsprechenden Medien betrieben werden. Bis auf das Nachverbrennen gilt das gleiche für in der Seitenwand des feuerfest ausgekleideten Herdbereichs angeordnete Düsen 36, die in jedem Fall einen Anschluß für ein Düsenschutzmedium aufweisen, das neben Kohlenwasserstoffen und Inertgasen auch in einem Trägergas geförderte Kohle sein kann. Für sämtliche Düsenöffnungen gilt, daß sie bei einer Betriebsweise des Ofens, in der sie nicht gebraucht werden, nach Entfernen der Düsen auf einfache Weise verschlossen werden können.

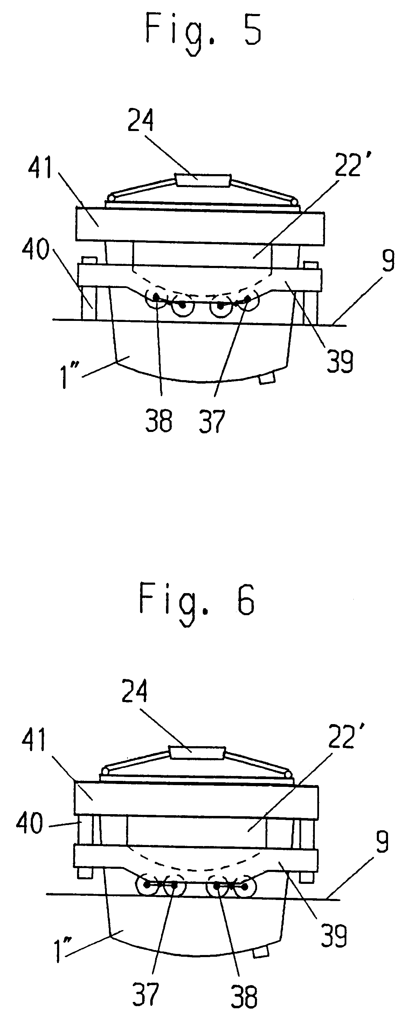

Fig. 5 und 6 zeigt ein Gefäß 1˝, welches beidseitig mit einer Wiege 22′ so versehen ist, daß die Kippachse des Gefäßes wieder im Bereich des Deckelherzstücks 24 verläuft. Zwei jeweils in einer Schwinge 37 gelagerte Rollenpaare 38 stützen in der in Fig. 5 gezeigten Betriebsstellung sich gegen die Wiege 22′ ab. Die Schwingen 37 sind jeweils an einem das Gefäß als Rechteck umfassenden Rahmen 39 so gelagert, daß sie sich - wie in Fig. 6 gezeigt - auf der Schiene 9 abstützen können und damit gleichzeitig als Fahrgestell für die Verfahrbarkeit des Gefäßes 1˝ dienen. Zu diesem Zweck ist an jeder Ecke des Rahmens 39 eine Hubeinrichtung, z.B. eine Spindel 40 vorgesehen, die sich im Betriebszustand jeweils gegen die Schiene 9 abstützt (Fig. 5) und im Verfahrzustand das Gefäß über einen im Deckelbereich angeordneten Tragring 41 anhebt und damit gleichzeitig die Wiegen 22′ von den Rollen 38 abhebt (Fig. 6).

## Patentansprüche

1. Ofenanlage zum Einschmelzen von Schrott o. dgl. Eisenträgern mit einem kippbaren Gefäß, das einen feuerfest ausgekleideten Herd und zumindest z. T. wassergekühlte Seitenwände mit einem runden oder ovalen horizontalen, mindestens im Seitenwandbereich über die Gefäß-Höhe im wesentlichen gleichbleibenden Querschnitt aufweist und mit einem abnehmbaren Deckel, wenigstens einer durch eine zugeordnete Deckelöffnung absenkbare Elektrode und einer Abstichöffnung versehen und mehreren durch die Seitenwände einführbaren sowie im Herdbereich angeordneten Düsen ausrüstbar ist, und dessen Höhe höchstens etwa gleich dem Innendurchmesser ist, **dadurch gekennzeichnet,** daß das Gefäß um eine im Deckelbereich liegende horizontale Achse (2) kippbar und etwa rechtwinklig zu der Achse (2) horizontal verfahrbar ist, daß die Abstichöffnung (11, 11′) im Bereich der Kante zwischen Herd und Seitenwand in der in der Verfahrrichtung liegenden Gefäßmittelebene (10) angeordnet, von außen verschließbar und zumindest in der Abstichstellung des Gefäßes (1, 1′, 1˝) nach unten gerichtet ist, und der Abstichöffnung etwa gegenüberliegend eine Abschlacköffnung (33) in der Gefäß-Normallage oberhalb des Herdes angeordnet ist, und daß mindestens ein Teil der Düsen (35, 36) als Kohle-Sauerstoff-Düsen ausgebildet ist.

2. Ofenanlage nach Anspruch 1, dadurch gekennzeichnet, daß das Verhältnis des Innendurchmessers zur Höhe des Gefäßes zwischen etwa 0,6 und 1,1, vorzugsweise zwischen etwa 0,8 und 1 liegt.

3. Ofenanlage nach Anspruch 1 oder 2, dadurch gekennzeichnet, daß die horizontale Achse (2) im Bereich des Durchtritts der Elektrode(n) (17, 17′) durch den Deckel (18. 18′) verläuft und die Deckelöffnung(en) so gestaltet und bemessen ist bzw. sind, daß das Gefäß (1, 1′, 1˝) auch in der eingefahrenen Stellung der Elektrode(n) kippbar ist.

4. Ofenanlage nach einem der Ansprüche 1 bis 3, dadurch gekennzeichnet, daß das Gefäß (1, 1′, 1˝) mittels eines schienengebundenen Wagens (7, 39) verfahrbar ist, in welchem es um die horizontale Achse (2) pendelnd aufgehängt ist.

5. Ofenanlage nach Anspruch 4, dadurch gekennzeichnet, daß für die Pendel-Aufhängung beiderseits des Gefäß eine rollengestützte Wiege (22, 22′) angeordnet ist.

6. Ofenanlage nach Anspruch 5, dadurch gekennzeichnet, daß die in einem Rahmen (39) zusammengefaßten Rollen von der Wiege (22′) abrückbar und zum Verfahren des Gefäßes (1˝) auf die zugeordnete der beiden Schienen (9) abstütztbar sind.

7. Ofenanlage nach einem der vorhergehenden Ansprüche, dadurch gekennzeichnet, daß über dem Gefäß (1, 1′) mindestens eine Elektroden-Hubeinrichtung (12, 12′) lotrecht verfahrbar angeordnet ist, an deren unterem Ende die Elektrode (17, 17′) angeordnet ist.

8. Ofenanlage nach Anspruch 7, dadurch gekennzeichnet, daß die Hubeinrichtung (12′) eine parallel zur Elektrode (17′) verlaufende und geführte Schiene (27) und am unteren Ende eine mit einer Elektroden-Haltevorrichtung versehene Konsole (26) aufweist.

9. Ofenanlage nach Anspruch 7 oder 8, dadurch gekennzeichnet, daß die Hubeinrichtung (12′) durch einen vorzugsweise mit einer hubvergrößernden Seilrollenanordnung versehenen Hydraulikzylinder (29) betätigbar ist.

10. Ofenanlage nach einem der vorhergehenden Ansprüche, dadurch gekennzeichnet, daß die wassergekühlten Seitenwände des Gefäßes (1, 1′) aus austauschbaren Segmenten bestehen, die zumindest im Bereich der Abstichöffnung (11, 11′) gegen solche mit einer anderen Höhe dadurch austauschbar sind, daß die Herdwand den kürzeren Segmenten entsprechend nach oben hin verlängert und feuerfest auskleidbar ist.

11. Ofenanlage nach einem der vorhergehenden Ansprüche, dadurch gekennzeichnet, daß der Verschluß der Abstichöffnung einen seitlich verschwenkbaren Deckel (32) aufweist.

12. Ofenanlage nach einem der vorhergehenden Ansprüche, dadurch gekennzeichnet, daß die verschließbare Abschlacköffnung (33) einen runden Querschnitt von verhältnismäßig kleinem Durchmesser aufweist.

13. Ofenanlage nach einem der vorhergehenden Ansprüche, dadurch gekennzeichnet, daß die Elektrode(n) (17, 17′) gegen einen Plasmabrenner austauschbar ist bzw. sind.

14. Ofenanlage nach Anspruch 13, dadurch gekennzeichnet, daß die Hubeinrichtung (12, 12′) mit Versorgungs-Anschlüssen für den Plasmabrenner versehen ist.

15. Ofenanlage nach einem der vorhergehenden Ansprüche, dadurch gekennzeichnet, daß der wassergekühlte und mit einer Gasabsaugung (20) versehene Deckel (18. 18′) an eine Hubvorrichtung (19, 19′) angehängt ist.

16. Ofenanlage nach einem der vorhergehenden Ansprüche, dadurch gekennzeichnet, daß das Gefäß (1) von einem angepaßten mit mindestens einem verschließbaren seitlichen Ausgangstor für das Gefäß (1) versehenen Gehäuse (3) eng umschlossen ist.

17. Ofenanlage nach einem der vorhergehenden Ansprüche, dadurch gekennzeichnet, daß das Gefäß (1, 1′, 1˝) unter eine zugeordnete Schrottvorwärmeinrichtung fahrbar ist.

## Claims

1. A furnace installation for melting down scrap or the like Fe carriers with a tiltable vessel which has a refractory-lined hearth and at least partly water-cooled side walls with a round or oval, horizontal cross-section which is substantially constant at least in the side wall region to above the height of the vessel and is provided with a removable cover, at least one electrode which can be lowered through an associated opening in the cover and a taphole, and can be equipped with a plurality of nozzles which can be introduced through the side walls and which are located in the hearth region, and the height of which is at most approximately equal to the internal diameter,
characterised in that
the vessel is tiltable about a horizontal axis (2) located in the cover region and is movable horizontally approximately at right-angles to the axis (2), that the taphole (11, 11′) is located in the region of the edge between the hearth and side wall in the centre plane (10) of the vessel lying in the direction of movement, can be closed from the outside and is directed downwards at least in the tapping position of the vessel (1, 1′, 1˝), and a slag hole (33) is located approximately opposite the taphole in the normal position of the vessel above the hearth, and that at least a portion of the nozzles (35, 36) are constructed as carbon-oxygen nozzles.

2. A furnace installation according to Claim 1, characterised in that the ratio of the internal diameter to the height of the vessel is between about 0.6 and 1.1, preferably between about 0.8 and 1.

3. A furnace installation according to Claim 1 or 2, characterised in that the horizontal axis (2) runs in the region in which the electrode(s) (17, 17′) pass(es) through the cover (18, 18′) and the cover opening(s) is or are constructed and sized such that the vessel (1, 1′, 1˝) is also tiltable in the retracted position of the electrode(s).

4. A furnace installation according to one of Claims 1 to 3, characterised in that the vessel (1, 1′, 1˝) can be moved by means of a rail-borne carriage (7, 39) in which it is suspended in oscillating manner about the horizontal axis (2).

5. A furnace installation according to Claim 4, characterised in that a roller-supported cradle (22, 22′) is located on either side of the vessel for the oscillating suspension.

6. A furnace installation according to Claim 5, characterised in that the rollers which are combined in a frame (39) can be removed from the cradle (22′) and can be supported on the associated one of the two rails (9) for moving the vessel (1˝).

7. A furnace installation according to one of the preceding Claims, characterised in that at least one electrode lifting means (12, 12′) is arranged to be vertically movable above the vessel (1, 1′), on the lower end of which means the electrode (17, 17′) is located.

8. A furnace installation according to Claim 7, characterised in that the lifting means (12′) has a rail (27) which runs and is guided parallel to the electrode (17′) and a bracket (26) provided with an electrode holding device at the lower end.

9. A furnace installation according to Claim 7 or 8, characterised in that the lifting means (12′) can be actuated by means of a hydraulic cylinder (29) which is preferably provided with a lift-increasing cable pulley arrangement.

10. A furnace installation according to one of the preceding Claims, characterised in that the water-cooled side walls of the vessel (1, 1′) consist of exchangeable segments which at least in the region of the taphole (11, 11′) can be exchanged for those of a different height in that the hearth wall is extended upwards corresponding to the shorter segments and can be provided with a refractory lining.

11. A furnace installation according to one of the preceding Claims, characterised in that the closure of the taphole has a laterally pivotable cover (32).

12. A furnace installation according to one of the preceding Claims, characterised in that the closable slag hole (33) has a round cross-section of relatively small diameter.

13. A furnace installation according to one of the preceding Claims, characterised in that the electrode(s) (17, 17′) is or are exchangeable for a plasma burner.

14. A furnace installation according to Claim 13, characterised in that the lifting means (12, 12′) is provided with supply connections for the plasma burner.

15. A furnace installation according to one of the preceding Claims, characterised in that the water-cooled cover (18, 18′) which is provided with a gas extraction means (20) is suspended on a lifting means (19, 19′).

16. A furnace installation according to one of the preceding Claims, characterised in that the vessel (1) is tightly surrounded by an adapted housing (3) provided with at least one closable lateral exit gate for the vessel (1).

17. A furnace installation according to one of the preceding Claims, characterised in that the vessel (1, 1′, 1˝) can be moved beneath an associated scrap preheater.

## Revendications

1. Four pour faire fondre de la ferraille ou des corps en fer analogues, comportant un récipient basculant qui présente un creuset revêtu de manière résistante au feu et des parois latérales au moins partiellement refroidies à l'eau, présentant une section transversale ronde ou ovale, horizontale et constante pour l'essentiel au moins dans la zone des parois latérales au-dessus de la hauteur du récipient, et un couvercle pouvant être enlevé, muni au moins d'une électrode pouvant être rabaissée par une ouverture associée du couvercle et d'une ouverture de coulée, et pouvant être équipé de plusieurs buses qui peuvent être introduites par les parois latérales et qui sont agencées dans la zone du creuset, et dont la hauteur est environ égale au diamètre interne,
caractérisé en ce que le récipient peut être basculé autour d'un axe horizontal (2) situé dans la zone du couvercle et peut être déplacé horizontalement à peu près orthogonalement à l'axe (2), en ce que l'ouverture de coulée (11, 11′) est pratiquée dans la zone du bord entre le creuset et la paroi latérale dans le plan central (10) du récipient situé dans la direction de déplacement, l'ouverture de coulée pouvant être fermée de l'extérieur et étant dirigée vers le bas au moins dans la position de coulée du récipient (1, 1′, 1˝), et une ouverture d'évacuation (33) est agencée dans la position normale du récipient au-dessus du creuset, de façon à peu près opposée à l'ouverture de coulée, et en ce qu'au moins certaines buses (35, 36) sont réalisées comme buses à carbone-oxygène.

2. Four selon la revendication 1,
caractérisé en ce que le rapport entre le diamètre interne et la hauteur du récipient est situé à peu près entre O,6 et 1,1, de préférence à peu près entre 0,8 et 1.

3. Four selon l'une des revendications 1 ou 2,
caractérisé en ce que l'axe horizontal (2) s'étend dans la zone de passage de(s) l'électrode(s) (17, 17′) à travers le couvercle (18, 18′) et l'ouverture(s) est formée et dimensionnée de sorte que le récipient (1, 1′, 1˝) peut également être basculé dans la position introduite de(s) l'électrode(s).

4. Four selon l'une des revendications 1 à 3,
caractérisé en ce que le récipient (1, 1′, 1˝) peut être déplacé au moyen d'un chariot (7, 39) roulant sur rails, dans lequel il est accroché de façon oscillante autour de l'axe horizontal (2).

5. Four selon la revendication 4,
caractérisé en ce qu'un berceau (22, 22′) prenant appui sur des rouleaux est agencé des deux côtés du récipient pour l'accrochage oscillant.

6. Four selon la revendication 5,
caractérisé en ce que les rouleaux regroupés dans un cadre (39) peuvent être écartés du berceau (22′) et peuvent prendre appui sur le rail associé des deux rails (9) pour déplacer le récipient (1˝).

7. Four selon l'une des revendications précédentes,
caractérisé en ce qu'au-dessus du récipient (1, 1′) est agencé de façon à pouvoir être déplacé verticalement au moins un dispositif de levage d'électrode (12, 12′), à l'extrémité inférieure duquel est agencée l'électrode (17, 17′).

8. Four selon la revendication 7,
caractérisé en que le dispositif de levage (12′) présente un rail (27) guidé et s'étendant parallèlement à l'électrode (17′) et à l'extrémité inférieure une console (26) munie d'un dispositif de maintien d'électrode.

9. Four selon l'une des revendications 7 ou 8,
caractérisé en ce que le dispositif de levage (12′) peut être actionné par un vérin hydraulique (29) muni de préférence d'un dispositif à poulie augmenteur de course.

10. Four selon l'une des revendications précédentes,
caractérisé en ce que les parois latérales refroidies à l'eau du récipient (1, 1′) sont constituées de tronçons amovibles qui, au moins dans la zone de l'ouverture de coulée (11, 11′), peuvent être remplacés par d'autres présentant une hauteur différente de sorte que la paroi du creuset, de façon correspondante au tronçon le plus court, est prolongée vers le haut et peut être revêtue de façon résistante au feu.

11. Four selon l'une des revendications précédentes,
caractérisé en ce que la fermeture de l'ouverture de coulée est pourvue d'un couvercle (32) susceptible de pivoter latéralement.

12. Four selon l'une des revendications précédentes,
caractérisé en ce que l'ouverture d'évacuation (33) susceptible d'être fermée présente une section transversale ronde avec un diamètre relativement petit.

13. Four selon l'une des revendications précédentes,
caractérisé en ce que l'électrode(s) (17, 17′) peut être remplacée par une torche à plasma.

14. Four selon la revendication 13,
caractérisé en ce que le dispositif de levage (12, 12′) est muni de raccords d'alimentation pour la torche à plasma.

15. Four selon l'une des revendications précédentes,
caractérisé en ce que le couvercle (18, 18′) refroidi à l'eau et muni d'un aspirateur de gaz (20) est accroché à un système de levage (19, 19′).

16. Four selon l'une des revendications précédentes,
caractérisé en ce que le récipient (1) est entouré de façon serrée d'un boîtier adapté (3) comportant au moins une porte de sortie latérale pouvant être fermée pour le récipient (1).

17. Four selon l'une des revendications précédentes,
caractérisé en ce que le récipient (1, 1′, 1˝) peut être déplacé au-dessous d'un dispositif associé de préchauffage de la ferraille.
